# EUROPÄISCHE PATENTSCHRIFT

(11) **EP 1 718 508 B1**
(45) Veröffentlichungstag und Bekanntmachung des Hinweises auf die Patenterteilung: **06.06.2012**
(21) Anmeldenummer: 05707870.1
(22) Anmeldetag: 27.01.2005
(51) Int. Cl.: B60S 1/04

(54) **SCHEIBENWISCHVORRICHTUNG**
WINDSHIELD WIPING DEVICE
DISPOSITIF D'ESSUIE-GLACE

(30) Priorität: 20.02.2004 DE 102004008333
(43) Veröffentlichungstag der Anmeldung: 08.11.2006
(73) Patentinhaber: ROBERT BOSCH GMBH, 70442 Stuttgart (DE)
(72) Erfinder: KRAUS, Achim, 77815 Buehl (DE); RAPP, Juergen, 77886 Lauf (DE)
(86) Internationale Anmeldenummer: PCT/EP2005/050352
(87) Internationale Veröffentlichungsnummer: WO 2005/080158

(56) Entgegenhaltungen:
- EP-A- 0 739 792
- EP-A- 0 852 195
- EP-A- 1 103 434
- EP-A- 1 122 137
- EP-A- 1 219 513
- FR-A- 2 840 270

## Beschreibung

### Stand der Technik

Die Erfindung betrifft eine Scheibenwischvorrichtung nach Gattung des unabhängigen Anspruchs:

Es sind schon zahlreiche Scheibenwischvorrichtungen bekannt, die ein Wischerlager mit einem Formrohr und einer darin gelagerten Wischerwelle aufweisen, an der ein Wischhebel befestigbar ist. Diese Wischerlager weisen ein Befestigungselement auf, das einstückig mit dem Formrohr ausgebildet ist und zur Befestigung der Scheibenwischvorrichtung am Kraftfahrzeug dient.

Insbesondere aus der EP-A-0 739 792 ist eine derartige Scheibenwischvorrichtung bekannt Die die Wischerwelle tragenden Wischerlager weisen dort ein Befestigungselement auf, das mit einer Sollbruchstelle versehen ist, so dass das Wischerlager, beim Aufprall eines Fußgängers auf die Wischerwelle, in das Innere des Kraftfahrzeugs abtauchen kann. Die Sollbruchstellen sind hierbei als Einschnürungen des Querschnitts des Befestigungselements ausgebildet. Die dort gezeigten Ausbildungen sind aufwändig in der Fertigung, wobei es sich weiterhin die Kraft, die zum Bruch der Sollbruchstelle benötigt wird, nur ungenau einstellen lässt.

Weitere Scheibenwischvorrichtungen mit Befestigungselementen, die eine Sollbruchstelle aufweisen, sind in EP 1 219 513 A2, EP 0 739 792 A1, FR 2 840 270 und EP 1122 137 A2 offenbart. Die EP 1 103 434 A1 und EP 0 852 195 A1 offenbaren weitere Ausgestaltungen eines Wischerlagers.

Es ist Aufgabe der Erfindung, eine genau einstellbare Sollbruchstelle für ein Befestigungselement einer Scheibenwischvorrichtung bereitzustellen.

Diese Aufgabe wird durch die Merkmale des Anspruchs 1 gelöst. Weitere vorteilhafte Ausführungsformen sind in den abhängigen Ansprüchen angegeben.

Die erfindungsgemäße Scheibenwischvorrichtung mit den Merkmalen des Hauptanspruchs hat den Vorteil, dass durch die Ausbildung der Sollbruchstelle als Loch eine wesentlich genauere Einstellung der Kraft ermöglicht wird, die notwendig ist, um das Wischerlager von der Karosserie des Fahrzeugs zu trennen. Auf diese Weise kann darüber hinaus das Aufprallverhalten, d.h. das Verhalten der Scheibenwischvorrichtung beim Aufprall eines Fußgängers auf die Wischerwelle, kraftfahrzeugspezifisch eingestellt werden. Weiterhin ist diese Ausbildung kostengünstig und in der Serienfertigung besonders praktikabel, da die Wischerlager in großen Stückzahlen gefertigt werden können und dann individuell für jeden Fahrzeugtyp die Sollbruchstellen in das Befestigungselement eingebracht werden können.

Nach der Erfindung ist das Befestigungselement als plattenartiger Fortsatz ausgebildet und einstückig mit dem Formrohr ausgebildet. Dadurch ist das Wischerlager einfach und kostengünstig, beispielsweise in einem Druckgussverfahren, herzustellen, wodurch vermieden wird, dass Scharniere, Nieten, Dübel oder andere Befestigungsmittel zwischen dem Befestigungselement und dem Formrohr benötigt werden, die im Betrieb störanfällig sind oder beim Aufprall eines Fußgängers beschädigt werden können.

In einer weiteren vorteilhaften Ausgestaltung weist das Befestigungselement zumindest ein Loch mit einem kreisrunden oder ovalen Querschnitt auf, da diese leicht, einfach und kostengünstig in das Befestigungselement eingebracht werden können, wobei durch Anzahl und Größe der Löcher die definierte Aufprallkraft leicht einstellbar ist.

Weiterhin ist es als vorteilhaft anzusehen, wenn mindestens ein Loch einen rechteckigen Querschnitt aufweist. Dieser ist leicht in das Befestigungselement einzufräsen und es können auch sehr niedrige Aufprallkräfte eingestellt werden.

Nach der Erfindung verläuft ein Loch bezüglich seiner Längsachse in der Ebene des Befestigungselementes, so dass das Bruchverhalten des Befestigungselements weiter verbessert, wird.

In einer besonders kostengünstigen Ausführung ist das Wischerlager zumindest teilweise aus Kunststoff ausgebildet. Dieser läßt sich einfacher verarbeiten als andere Werkstoffe. Hierbei ist vor allem faserverstärkter Kunststoff vorteilhaft.

Eine Ausbildung aus Druckguss ist für das Wischerlager ebenso vorteilhaft, da auf diese Weise große Wischerlager realisiert werden können, wie sie beispielsweise für große Fahrzeuge mit langen Wischhebeln benötigt werden.

Vorteilhaft ist weiterhin, dass die Sollbruchstelle (32) zwischen dem Befestigungspunkt (34) des Befestigungsabschnitts (20) und dem Formrohr (18) angeordnet

### Zeichnungen

Verschiedene Ausfuhmngsbeispiele der Erfindung sind in den Zeichnungen dargestellt und in der nachfolgenden Beschreibung näher erläutert. Es zeigen:
- Figur 1: eine erfindungsgemäße Scheibenwischvorrichtung in einer perspektivischen Darstellung,
- Figur 2: ein Wischerlager einer Scheibenwischvorrichtung in perspeküvischer Darstellung,
- Figur 3: eine Variation eines Wischerlagers aus Figur 2 und
- Figur 4: ein Wischerlager einer erfindungsgemäßen Scheibenwischvorrichtung in perspektivischer Darstellung.

### Beschreibung der Ausführungsbeispiele

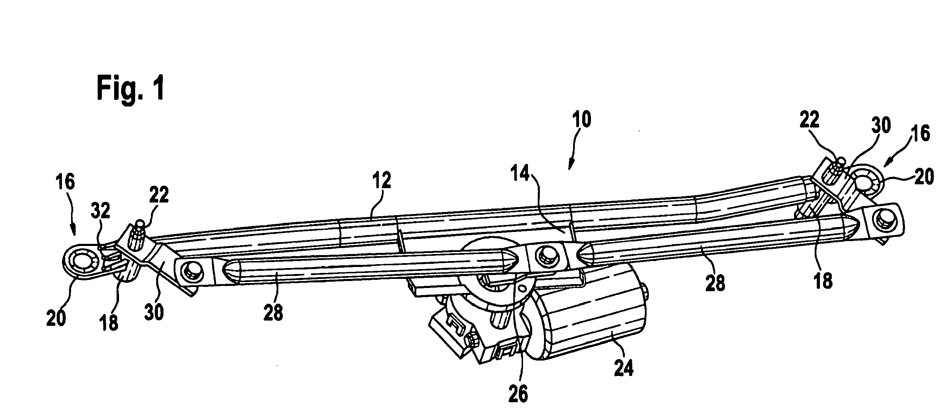

In Figur 1 ist eine erfindungsgemäße Scheibenwischvorrichtung 10 in perspektivischer Darstellung gezeigt.

Diese umfasst im Wesentlichen ein Trägerrohr 12 mit einer Trägerplatine 14, die aus Blech ausgebildet ist. An den beiden Enden des Trägernohrs 12 ist jeweils ein Wischerlager 16 befestigt, welches ein Formrohr 18 und ein Befestigungselement 20 aufweist, das zur Befestigung der Scheibenwischvorrichtung 10 am Kraftfahrzeug dient.

Im Formrohr 18 ist die Wischerwelle 22 gelagert, die mit hier nicht gezeigten Wischhebeln verbindbar ist Diese bewegen sich im Betrieb pendelnd über die Scheibe des Kraftfahrzeugs.

Hierzu ist ein Antrieb 24 an der Platine 14 befestigt, der eine Abtriebskurbel 26 aufweist, an die zwei Schubstangen 28 angelenkt sind. Die freien Enden der Schubstangen 28 sind drehbeweglich mit Antriebskurbeln 30 verbunden, die wiederum drehfest mit jeweils einer Wischerwelle 22 verbunden sind. Vollführt die Antriebskurbel 26 nun eine Hin-und Herbewegung oder eine umlaufende Kreisbewegung, so werden die Schubstangen 28 und damit die Antriebskurbeln 30 ebenso in eine Hin- und Herbewegung versetzt. Dadurch drehen sich die Wischerwellen 22 hin und her, so dass die Wischhebel über die Scheibe pendeln.

Trifft bei einem Unfall des Kraftfahrzeugs nun ein Fußgänger auf die Wischerwellen 22 auf, so wirkt eine große axiale Kraft auf das Formrohr 18 des Wischerlagers 16. Um Verletzungen am Fußgänger zu vermeiden ist es daher wünschenswert, dass die Schebenwischvorrichtung 10 aus ihrer Befestigung herausbricht. Die Wischwellen 22 können dann ins Innere des Kraftfahrzeugs abtauchen, wodurch die Verletzungsgefahr für den Fußgänger vermindert wird. Hierzu sind Sollbruchstellen 32 vorgesehen, die als Löcher im Befestigungselement 20 ausgebildet sind.

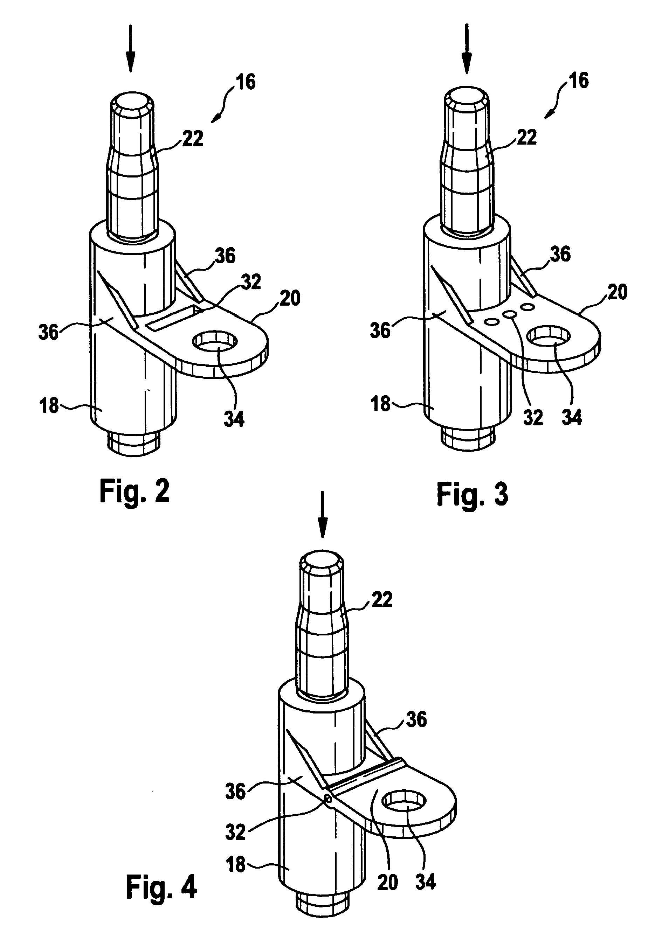

Figur 2 zeigt ein Wischerlager 16 einer Scheibenwischvorrichtung 10 in einer schematischen, perspektivischen Darstellung. Das Wischerlager 16 umfasst im Wesentlichen das Formrohr 18, das von im Wesentlichen hohlzylindrischer Gestalt ist und das die Wischerwelle 22 lagert. Einstückig mit dem Formrohr 18 ist das Befestigungselement 20 ausgebildet, das sich als plattenförmiger Fortsatz radial nach außen erstreckt. Die zur Plattenebene des Fortsatzes senkrecht angeordnete Achse ist hierbei etwa parallel zur Achse der Wischerwelle 22. Je nach Geometrie der Scheibenwischvorrichtung 10 kann die Ebene des Befestigungselements 20 natürlich auch abgewinkelt vorgesehen sein.

Das Befestigungselement 20 weist weiterhin eine Öffnung 34 auf, durch die ein Befestigungsmittel, beispielsweise eine Schraube, ein Niet- oder Steckstift zur Befestigung der Scheibenwischvorrichtung 10 am Kraftfahrzeug gezogen werden kann, so dass die Öffnung 34 als Befestigungspunkt der Scheibenwischvorrichtung 10 dient.

Zwischen Formrohr 18 und dem freien Ende des Befestigungselementes 20, oder genauer, zwischen Formrohr 18 und der Öffnung 34 des Befestigungselements 20, ist die rechteckige Sollbruchstelle 32 angeordnet, deren Längserstreckung senkrecht zur Verbindungslinie zwischen Öffnung 34 und Formrohr 18 verläuft. In einer Variation kann die Sollbruchstelle 32 natürlich auch an anderer Stelle, beispielsweise parallel zur Verbindungslinie zwischen Öffnung 34 und Formrohr 18 angeordnet sein. Die rechteckige Sollbruchstelle 32 durchgreift den plattenartigen Fortsatz des Befestigungselements 20 in voller Tiefe. In einer Variation kann dies jedoch auch wannenartig ausgestaltet sein, so dass ein Steg als Boden bestehen bleibt

In Figur 3 ist eine Variation des Wischerlagers aus Figur 2 dargestellt. Das Wischerlager 16 ist identisch wie in Figur 2 ausgebildet, jedoch ist die Sollbruchstelle 32 hier in anderer Weise ausgebildet. Es sind drei Bohrungen vorgesehen, die sich senkrecht zur Ebene des plattenartigen Befestigungselements 20 erstrecken. Neben den hier gezeigten drei Bohrungen können natürlich auch nur zwei oder nur eine Bohrung vorgesehen sein, auch vier, fünf oder sechs Bohrungen sind denkbar, möglich und sinnvoll. Die Bohrungen 32 müssen nicht unbedingt kreisrund ausgeführt sein, auch eine ovale Ausbildung ist hier möglich. Die Bohrungen 32 können radial um das Formrohr 18 angeordnet sein oder auch auf einer Geraden, die senkrecht zur Verbindungslinie zwischen Öffnung 34 und Wischerwelle 22 angeordnet ist. Ebenso können die Bohrungen 32 auch auf dieser Verbindungslinie zwischen Öffnung 34 und Wischerwelle 22 angeordnet sein.

In Figur 4 ist ein erfindungsgemäßens Wischerlager gezeigt. Hierbei ist eine Bohrung als Sollbruchstelle 32 vorgesehen, deren Längserstreckung in der Ebene des plattenartigen Befestigungselementes 20 zwischen Öffnung 34 und Wischwelle 22 verläuft. Im Bereich der Bohrung ist das plattenartige Befestigungselement 24 selbst etwas dicker ausgeführt.

Die Sollbruchstellen 32 können bei allen Ausführungen entweder direkt beim Druckgußverfahren des Wischerlagers 16 ausgeführt werden oder auch erst nach dem Gießen separat eingebracht werden.

Zur Verstärkung des plattenartigen Befestigungselementes 20 ist dieses zusätzlich über Verstärkungswände 36 mit dem Formrohr 18 verbunden. Die Verstärkungswände 36 erstrecken sich aus der Ebene des plattenartigen Befestigungselementes 20 vertikal heraus in Richtung des Formrohrs 18. Die Einmündung der Verstärkungswände 36 in das Plattenartige Befestigungselement 20 ist jedoch außerhalb des Bereichs der Sollbruchstellen 34 angeordnet.

In einer Variation können die Verstärkungswände 36 jedoch auch über die Sollbruchstellen 34 hinaus gehen. Dies muss bei der Dimensionierung der Sollbruchstellen natürlich berücksichtigt werden. Insbesondere können die Verstärkungswände 36 auch umlaufend entlang der gesamten Berandung des Befestigungselementes 20 verlaufen.

## Patentansprüche

1. Scheibenwischvorrichtung (10), insbesondere für ein Kraftfahrzeug, mit einem Wischerlager (16), einer in einem Formrohr (18) des Wischerlagers (16) gelagerten Wischerwelle (22), an der ein Wischhebel befestigbar ist und einem Befestigungselement (20), wobei das Befestigungselement (20) als plattenförmiger Fortsatz und einstückig mit dem Wischerlager (16) und mit dem Formrohr (18) ausgebildet ist, wobei das Befestigungselement (20) zur Befestigung der Scheibenwischvorrichtung (10) am Kraftfahrzeug dient und mindestens eine Sollbruchstelle (32) derart aufweist, dass das Wischerlager (16) im Fall einer definierten, im wesentlichen axialen Krafteinwirkung auf die Wischerwelle (22) in das Innere des Kraftfahrzeugs abzutauchen vermag, **dadurch gekennzeichnet, dass** die Sollbruchstelle (32) als Bohrung ausgebildet ist, die bezüglich ihrer Längsachse in der Ebene des Befestigungselements (20) zwischen einer Öffnung (34) des Befestigungselements (20) und der Wischerwelle (22) verläuft, wobei das Befestigungselement (20) im Bereich der Bohrung dicker ausgeführt ist.

2. Scheibenwischvorrichtung (10) nach Anspruch 1, **dadurch gekennzeichnet, dass** das Wischerlager (16) zumindest teilweise aus Kunststoff ausgebildet ist.

3. Scheibenwischvorrichtung (10) nach einem einem der vorhergehenden Ansprüche, **dadurch gekennzeichnet, dass** das Wischerlager (16) zumindest teilweise aus Druckguss, insbesondere Zink- oder Aluminium-Druckguss ausgebildet ist.

4. Scheibenwischvorrichtung (10) nach einem der vorhergehenden Ansprüche, **dadurch gekennzeichnet, dass** die Sollbruchstelle (32) zwischen dem Befestigungspunkt (34) des Befestigungsabschnitts (20) und dem Formrohr (18) angeordnet ist.

## Claims

1. Windscreen wiping device (10), in particular for a motor vehicle, with a wiper bearing (16), a wiper shaft (22) which is mounted in a shaped tube (18) of the wiper bearing (16) and to which a wiping lever can be fastened, and a fastening element (20), wherein the fastening element (20) is formed integrally with the wiper bearing (16) and the shaped tube (18) as a plate-like extension, wherein the fastening element (20) serves for fastening the windscreen wiping device (10) to the motor vehicle and has at least one predetermined breaking point (32) in such a manner that, in the event of a defined, substantially axial application of force to the wiper shaft (22), the wiper bearing (16) is capable of dipping into the interior of the motor vehicle, **characterized in that** the predetermined breaking point (32) is designed in the form of a bore which extends with regard to the longitudinal axis thereof in the plane of the fastening element (20) between an opening (34) in the fastening element (20) and the wiper shaft (22), the fastening element (20) being of thicker design in the region of the bore.

2. Windscreen wiping device (10) according to Claim 1, **characterized in that** the wiper bearing (16) is at least partially formed from plastic.

3. Windscreen wiping device (10) according to either of the preceding claims, **characterized in that** the wiper bearing (16) is at least partially formed from die casting, in particular zinc or aluminium die casting.

4. Windscreen wiping device (10) according to one of the preceding claims, **characterized in that** the predetermined breaking point (32) is arranged between the fastening point (34) of the fastening section (20) and the shaped tube (18).

## Revendications

1. Dispositif d'essuie-glace (10) en particulier pour un véhicule automobile, comprenant un palier d'essuie-glace (16), un arbre d'essuie-glace (22) monté dans un tube moulé (18) du palier d'essuie-glace (16), sur lequel peut être fixé un levier d'essuie-glace, et un élément de fixation (20), l'élément de fixation (20) étant réalisé sous forme de saillie en forme de plaque et étant réalisé d'une seule pièce avec le palier d'essuie-glace (16) et avec le tube moulé (18), l'élément de fixation (20) servant à la fixation du dispositif d'essuie-glace (10) sur le véhicule automobile, et présentant au moins un point destiné à la rupture (32), de telle sorte que le palier d'essuie-glace (16) puisse plonger dans l'intérieur du véhicule automobile dans le cas d'une application de force sensiblement axiale définie, sur l'arbre d'essuie-glace (22), **caractérisé en ce que** le point destiné à la rupture (32) est réalisé sous forme d'alésage qui s'étend, par rapport à son axe longitudinal, dans le plan de l'élément de fixation (20) entre une ouverture (34) de l'élément de fixation (20) et de l'arbre d'essuie-glace (22), l'élément de fixation (20) étant plus épais dans la région de l'alésage.

2. Dispositif d'essuie-glace (10) selon la revendication 1, **caractérisé en ce que** le palier d'essuie-glace (16) est réalisé au moins en partie en plastique.

3. Dispositif d'essuie-glace (10) selon l'une quelconque des revendications précédentes, **caractérisé en ce que** le palier d'essuie-glace (16) est réalisé au moins en partie en fonte coulée sous pression, notamment en zinc ou en aluminium coulé sous pression.

4. Dispositif d'essuie-glace (10) selon l'une quelconque des revendications précédentes, **caractérisé en ce que** le point destiné à la rupture (32) est disposé entre le point de fixation (34) de la portion de fixation (20) et le tube moulé (18).
